# EUROPEAN PATENT APPLICATION

(11) **EP 4 746 510 A1**
(43) Date of publication of application: **20.05.2026**
(21) Application number: 24839662.4
(22) Date of filing: 05.07.2024
(51) Int. Cl.: H04W 28/06, H04W 80/02, H04W 84/12

(54) **COMMUNICATION DEVICE, CONTROL METHOD, AND PROGRAM**

(30) Priority: 12.07.2023 JP 2023114785
(71) Applicant: Canon Kabushiki Kaisha, Tokyo, 146-8501 (JP)
(72) Inventor: YOSHIKAWA, Yuki, Tokyo 146-8501 (JP)
(74) Representative: Canon Europe Limited
(86) International application number: PCT/JP2024/024337
(87) International publication number: WO 2025/013770

(57) **Abstract**

A communication device includes a communication means that receives a wireless frame conforming to IEEE 802.11, a header acquisition means that acquires a header from the wireless frame, a frame generation means that generates a new frame in which part or all of the acquired header is placed after a header conforming to Ethernet, and another communication means that transmits the new frame to another communication device.

## Description

### Technical Field

The present invention relates to a communication device, a control method, and a program conforming to IEEE 802.11.

### Background Art

In recent years, the increasing amount of data to be communicated has prompted the development of communication technologies such as wireless local area networks (LANs). The Institute of Electrical and Electronics Engineers (IEEE) 802.11 series of standards is known as the primary set of communication standards for wireless LAN. The IEEE 802.11 series of standards include standards, such as IEEE 802.11a/b/g/n/ac/ax/be.

For example, in the IEEE 802.11be standard, Multi-Link communication is being studied, in which a single access point (AP) establishes multiple links with a single station (STA) over different multiple frequency channels and communicates concurrently (PTL 1). Two or more links may be selected from the same frequency band (the 2.4 GHz band, the 3.6 GHz band, the 4.9 and 5 GHz band, and the 6 GHz band) or from different respective frequency bands. APs and STAs that support Multi-Link are defined as AP Multi-Link Devices (MLDs) and STA MLDs in the IEEE 802.11be standard.

### Citation List

### Patent Literature

PTL 1: Japanese Patent Laid-Open No. 2021-103805

### Summary of Invention

### Technical Problem

In the successor standard to IEEE 802.11be, methods to improve usability using Multi-Link are under study. Specifically, APs that process the Upper MAC (Upper APs) and those that process the Lower MAC (Lower APs) are configured differently. This reduces the processing load on the Lower APs, enabling them to be smaller and consume less power. Thus, network formation can be achieved inexpensively while maintaining communication coverage.

As described above, different configurations are being considered for APs that process the Upper MAC (Upper APs) and those that process the Lower MAC (Lower APs). However, when communicating between an AP that processes the Upper MAC and an AP that processes the Lower MAC, the handling of the wireless MAC header transmitted and received between the Lower AP and an STA is not specified.

### Solution to Problem

In order to achieve the above-described purpose, a communication device according to an aspect of the present invention includes:
a communication means that receives a wireless frame conforming to IEEE 802.11,
a header acquisition means that acquires a header from the wireless frame,
a frame generation means that generates a new frame in which part or all of the acquired header is placed after a header conforming to Ethernet and further a frame body of the received wireless frame is placed after the header, and
another communication means that transmits the new frame to another communication device.

### Advantageous Effects of Invention

Frames that include information regarding the wireless MAC header can be transmitted between Upper and Lower APs, allowing multiple APs to operate as a single AP and communicate with an STA.

### Brief Description of Drawings

[Fig. 1] Fig. 1 is a diagram illustrating an example of the configuration of a network.
[Fig. 2] Fig. 2 is a diagram illustrating an example of the hardware configuration of an AP and an STA.
[Fig. 3] Fig. 3 is a diagram illustrating an example of the functional configuration of the AP and the STA.
[Fig. 4] Fig. 4 is a flowchart diagram illustrating an example of a data forwarding process of a Lower AP.
[Fig. 5] Fig. 5 is a flowchart diagram illustrating an example of a data reception process of an Upper AP.
[Fig. 6] Fig. 6 is a flowchart diagram illustrating an example of a data transmission process of an Upper AP.
[Fig. 7] Fig. 7 is a flowchart diagram illustrating an example of a data forwarding process of a Lower AP.
[Fig. 8] Fig. 8 is a diagram illustrating an example of a sequence.
[Fig. 9] Fig. 9 is a diagram illustrating an example of the configuration of a frame transmitted between a Lower AP and an Upper AP.

### Description of Embodiments

In the following, embodiments of the present invention will be described in detail with reference to the accompanying drawings. Note that the following embodiments are merely examples to illustrate the present invention and are not intended to limit the scope of the present invention.

### (Configuration of Wireless Communication System)

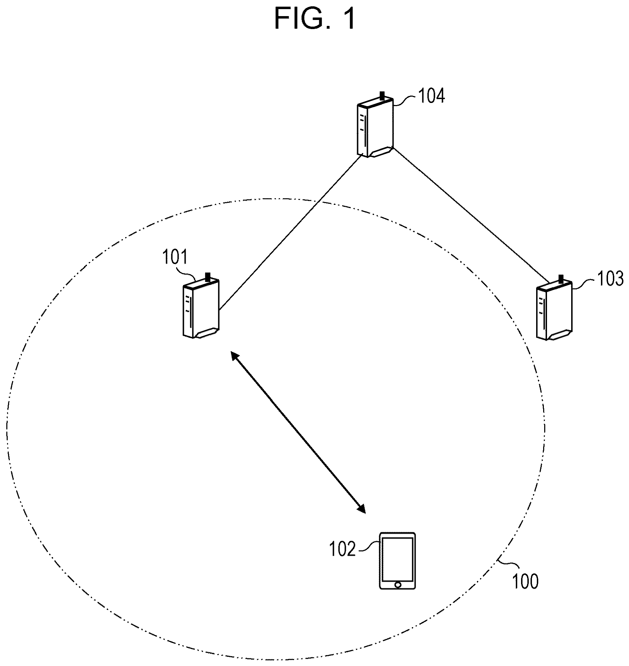

Fig. 1 illustrates an example of the configuration of a network according to the present embodiment. Fig. 1 illustrates a configuration in which a Station (STA) (STA 102) participates in a network established by an Upper Access Point (AP) 104 (AP 104) and a Lower AP 101 and a Lower AP 103 (the AP 101 and the AP 103, respectively). Assume that the AP 101 operates with the same parameters as the APs 103 and 104 and that the three APs realize the operation of a single AP. The range where radio waves from the AP 101 reach is denoted by 100. That is, the STA 102 can receive and transmit signals that the AP 101 receives and transmits. The AP 101 can receive and transmit signals directly from and to the AP 104, and the AP 103 can receive and transmit signals directly from and to the AP 104.

The AP 104 operates as an Upper AP. Its roles include the following (1) through (9) illustrated in Table 1.

**[Table 1]**

| | |
|---|---|
| (1) | Port control for IEEE 802.1X authentication |
| (2) | Determination of Mac Service Data Unit (MSDU) data limit |
| (3) | Transmission and reception of Aggregation-MSDU (A-MSDU) |
| (4) | Block Ack generation |
| (5) | Sequence number assignment, packet number assignment |
| (6) | Encryption and decryption of MAC Protocol Data Unit (MPDU) |
| (7) | TID-to-Link Mapping, Link aggregation |
| (8) | Duplicate frame detection |
| (9) | Generation of shared key (PTK; Pairwise Transient Key, PMK; Pairwise Master Key, GTK; Group Tempral Key, GMK; Group Master Key) used in communication |

The roles (1) through (9) are described in detail below.

IEEE 802.1X authentication is a server-based authentication method that enables connection control of STAs. MSDU data limit refers to determining the extent to which data can be received or transmitted in terms of length. A-MSDU is one of the frame aggregation methods, and it allows multiple frame bodies (Frame Bodies) to be contained within a single media access control (MAC) frame. Block Ack is a mechanism that collectively returns an acknowledgment (Ack) for multiple data, and it generates a Block Ack for multiple data. A sequence number is assigned to each frame to indicate the order of the frames. When a Block Ack is returned, the sequence number serves as an index, making it possible to collectively indicate which frames have been successfully received. A packet number is also incremented in the same manner, but it is used for encryption and decryption. The encryption and decryption of an MPDU are performed using this packet number and a generated encryption key. TID-to-Link Mapping determines which Traffic Identifier (TID) is assigned to which AP. When an AP supports Multi-Link, TID-to-Link Mapping determines which TID is assigned to each link. Duplication detection is performed based on duplication of the sequence number or the packet number.

The APs 101 and 103 operate as Lower APs, and their roles include the following (1) through (4) illustrated in Table 2.

**[Table 2]**

| | |
|---|---|
| (1) | Cyclic Redundancy Code (CRC) generation and verification |
| (2) | Aggregation-MPDU (A-MPDU) generation and analysis |
| (3) | Destination address filtering |
| (4) | Recording of Block Ack sequence number |

The roles (1) through (4) are described in detail below.

CRC generation and verification correspond to generation of a Frame Check Sequence (FCS) value appended to the end of a frame, or verification of the FCS value contained in a received frame. A-MPDU is a frame aggregation method in which multiple frames are included within a frame to be transmitted, and these frames are aggregated and disassembled. In destination address filtering, it is checked whether the destination address contained in the frame belongs to the AP 101 or the AP 103, or whether it is a multicast or broadcast address that includes the APs 101 and 103. If the address is one that a certain device should receive itself, the device receives the frame and forwards it to the AP 104. If the address is not one that the device should receive itself, the device discards the frame. In addition, the device records the sequence number of the Block Ack.

The AP 101 and the STA 102 and APs 103 and 104 can perform wireless communication in compliance with the IEEE 802.11bn (Ultra High Reliability) standard, the successor to IEEE 802.11be. Note that IEEE stands for Institute of Electrial and Electronics Engineers. Each communication device can communicate in the 2.4 GHz frequency band, the 3.6 GHz frequency band, the 5 GHz frequency band, and the 6 GHz frequency band, as well as in the 45 GHz frequency band and the 60 GHz frequency band, which are referred to as millimeter waves. The frequency bands used by the individual communication devices are not limited to these. The individual communication devices may use different frequency bands, such as the Sub-1 GHz band, for example. The AP 101 and the STA 102 can communicate using bandwidths of 20 GHz, 40 MHz, 80 MHz, 160 MHz, 320 MHz, 540 MHz, 640 MHz, 1080 MHz, and 2160 MHz. The bandwidths used by the individual communication devices are not limited to these, and may be multiples of 20 MHz, such as 60 MHz and 240 MHz, or do not have to be multiples of 20 MHz, such as 4 MHz and 24 MHz.

Although the AP 101, the STA 102, the AP 103, and the AP 104 are assumed to support the IEEE 802.11bn standard, each communication device may also support legacy standards that predate the IEEE 802.11bn standard. Specifically, the AP 101, the STA 102, the AP 103, and the AP 104 may support at least one of the IEEE 802.11a/b/g/n/ac/ax/be standards. In addition to the IEEE 802.11 series of standards, each communication device may support other communication standards such as Bluetooth^{®}, NFC, UWB, ZigBee, and MBOA. Note that UWB stands for Ultra Wide Band, and MBOA stands for Multi Band OFDM Alliance. NFC stands for Near Field Communication.

UWB includes wireless USB, wireless 1394, and WiNET, for example. Moreover, each communication device may support communication standards for wired communication, such as wired LAN.

In the present embodiment, assume that communication between the AP 104 and the APs 101 and 103 is wired communication. Assume that communication between the AP 101 and the STA 102 is wireless communication. Specific examples of the APs 101, 103, and 104 include, but are not limited to, wireless LAN routers and personal computers (PCs). The AP 101 may be an information processing device such as a wireless chip that can perform wireless communication in compliance with the IEEE 802.11bn standard. Specific examples of the STA 102 include, but are not limited to, cameras, tablets, smartphones, PCs, cell phones, video cameras, and headsets. The STA 102 may be an information processing device such as a wireless chip that can perform wireless communication in compliance with the IEEE 802.11bn standard.

In the IEEE 802.11 series of standards, the bandwidth of each frequency channel in the 2.4 GHz band, the 5 GHz band, and the 6 GHz band is defined as 20 MHz. Moreover, the bandwidth of each frequency channel in the 45 GHz band is defined as 540 MHz, and 1080 MHz or 2160 MHz in the 60 GHz band. A frequency channel in this case is a frequency channel defined in the IEEE 802.11 series of standards, and multiple frequency channels are defined for each of the 2.4 GHz frequency band, the 5 GHz frequency band, the 6 GHz frequency band, the 45 GHz frequency band, and the 60 GHz frequency band. Note that a bandwidth of 40 MHz or more may be used in a single frequency channel by bonding adjacent frequency channels.

### (Configuration of AP and STA)

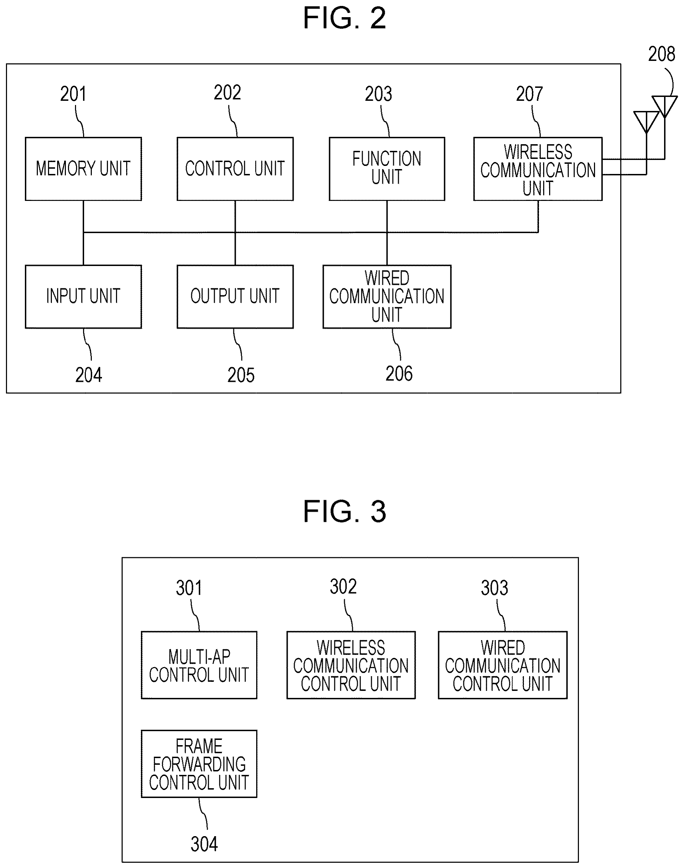

Fig. 2 illustrates an example of the hardware configuration of the AP 101 according to the present embodiment. Note that the APs 103 and 104 and the STA 102 also have substantially the same configuration. The AP 101 includes a memory unit 201, a control unit 202, a function unit 203, an input unit 204, an output unit 205, a wired communication unit 206, a wireless communication unit 207, and an antenna 208. There may be multiple antennas.

The memory unit 201 includes one or more memories such as a read-only memory (ROM) and a random access memory (RAM), and stores computer programs for performing various operations described below and various types of information, such as communication parameters for wireless communication. ROM stands for Read Only Memory, and RAM stands for RandomAccess Memory. Note that, as the memory unit 201, a storage medium such as a flexible disk, a hard disk, an optical disk, a magneto-optical disk, a compact disc read-only memory (CD-ROM), a compact disc recordable (CD-R), a magnetic tape, a non-volatile memory card, or a digital video disc (DVD) may also be used other than memories such as a ROM and a RAM. The memory unit 201 may include, for example, multiple memories.

The control unit 202 includes, for example, one or more processors, such as a central processing unit (CPU) and a microprocessing unit (MPU), and controls the entire AP 101 by executing computer programs stored in the memory unit 201. The control unit 202 may control the entire AP 101 through cooperative execution of the programs and operating system (OS) stored in the memory unit 201. The control unit 202 also generates data and signals (wireless frames) to be transmitted in communication with other communication devices. Note that CPU stands for Central Processing Unit, and MPU stands for Micro Processing Unit. The control unit 202 may be equipped with multiple processors such as multicore processors and may use the multiple processors to control the entire STA 102.

The control unit 202 also controls the function unit 203 to perform wireless communication and predetermined processes, such as image capturing, printing, and projection. The function unit 203 is hardware that enables the AP 101 to perform the predetermined processes.

The input unit 204 accepts various operations from the user. The output unit 205 provides various outputs to the user through a monitor screen and a speaker. In this case, outputs from the output unit 205 include display on the monitor screen, audio output through the speaker, vibration output, and the like. It is possible to realize both the input unit 204 and the output unit 205 in a single module, such as a touch panel. Each of the input unit 204 and output unit 205 and the AP 101 may be formed so as to be integrated with each other or may be separate from each other.

The wireless communication unit 207 controls wireless communication in compliance with the IEEE 802.11bn standard. The wireless communication unit 207 controls wireless communication in compliance with the other IEEE 802.11 series of standards in addition to the IEEE 802.11bn standard. The wireless communication unit 207 controls the antenna 208 to transmit and receive signals for wireless communication generated by the control unit 202.

The wired communication unit 206 controls wired communication, such as a wired LAN in compliance with the Ethernet standard. The Ethernet standard may be 10BASE-T, 100BASE-TX, 1000BASE-T, 1000BASE-TX, or any other standard.

In a case where the AP 101 supports, for example, NFC and Bluetooth standards in addition to the IEEE 802.11bn standard, the AP 101 may control wireless communication in compliance with these communication standards. In a case where the AP 101 is capable of performing wireless communication in compliance with multiple communication standards, the AP 101 may be configured to have wireless communication units and antennas corresponding to the respective communication standards separately. The AP 101 exchanges data, such as image data, document data, and video data, with the STA 102 via the wireless communication unit 207. The antenna 208 may be configured as a separate unit from the wireless communication unit 207, or the antenna 208 and the wireless communication unit 207 may be formed as a single integrated module.

The antenna 208 is an antenna capable of performing communication in the 2.4 GHz band, the 5 GHz band, the 6 GHz band, the 45 GHz band, and the 60 GHz band. In the present embodiment, the AP 101 is assumed to have two antennas but may have three antennas or more. Alternatively, the AP 101 may have different antennas for the respective frequency bands. In a case where the AP 101 has multiple antennas, the AP 101 may have wireless communication units 207 corresponding to the respective antennas.

The STA 102 does not need to have the wired communication unit 206.

Fig. 3 is a block diagram of the functional configuration of the AP 101 according to the present embodiment. Note that the APs 103 and 104 and the STA 102 also have substantially the same configuration.

The AP 101 includes a multi-AP control unit 301, a wireless communication control unit 302, a wired communication control unit 303, and a frame forwarding control unit 304.

The multi-AP control unit 301 is a control unit that controls a communication process to enable the AP 101 to operate as a single AP in coordination with the AP 104. This control unit performs frame generation and frame analysis for the AP 101 to operate as a Lower AP.

The wireless communication control unit 302 is a control unit that performs control for the AP 101 to wirelessly communicate with the STA 102. The wireless communication control unit 302 transmits frames destined for the STA 102 and transmitted from the frame forwarding control unit 304 or transmits frames received from the STA 102 to the frame forwarding control unit 304.

The wired communication control unit 303 is a control unit that performs control for the AP 101 to communicate with the AP 104 in a wired manner. The wired communication control unit 303 transmits frames destined for the AP 104 and transmitted from the frame forwarding control unit 304 or transmits frames received from the AP 104 to the frame forwarding control unit 304.

The frame forwarding control unit 304 is a control unit that controls frame forwarding for the AP 101 to operate as a Lower AP. The frame forwarding control unit 304 is further divided into a header acquisition unit and a frame generation unit, which are not illustrated in the diagram. Upon receiving the frame received from the STA 102 via the wireless communication control unit 302, the header acquisition unit acquires the header of the frame received via the wireless communication control unit 302. The frame generation unit places part or all of the acquired header after the header for wired communication to convert the frame into a frame that can be forwarded via wired communication and sends the frame to the wired communication control unit 303. Upon receiving the frame received from the AP 104 via the wired communication control unit 303, the header acquisition unit acquires the header of the frame received via the wired communication control unit 303. The frame generation unit discards the header for wired communication and sends the frame to the wireless communication control unit 302. If any header for wireless communication is missing, the frame generation unit adds the missing header(s) to convert the frame into a frame that can be forwarded via wireless communication and sends the frame to the wireless communication control unit 302.

Note that the AP 104 does not have to include the frame forwarding control unit 304, and the STA 102 does not have to include the multi-AP control unit 301, the wired communication control unit 303, or the frame forwarding control unit 304.

### (Process Flow)

Subsequently, the flows of processes performed by the APs and STA as described above and sequences in the wireless communication system, for example, will be described.

In the present embodiment, the STA 102 transmits a data frame. Upon receiving the data frame, the AP 101 forwards the data frame to the AP 104. Thereafter, the AP 104 transmits a data frame. Upon receiving the data frame, the AP 101 forwards the data frame to the STA 102. Although data frames are forwarded in the present embodiment, other frames may be forwarded in the same or similar manner. For example, Management frames used for disconnection and Control frames used for communication control may be forwarded in the same or similar manner.

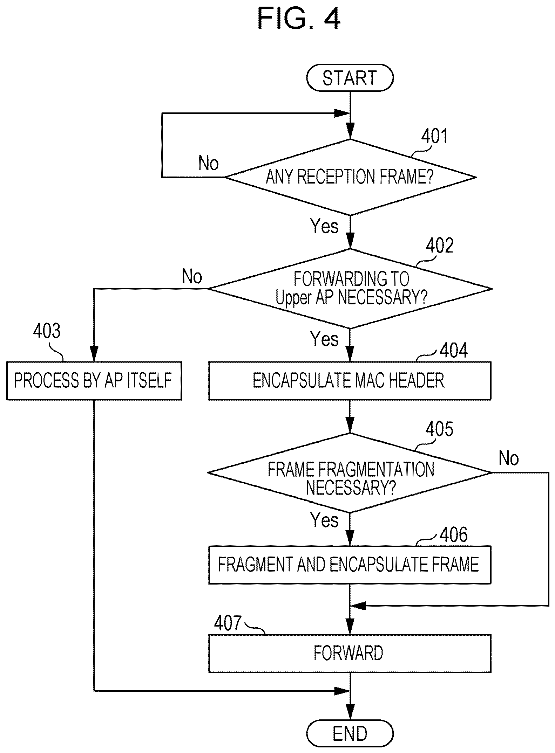

Fig. 4 is a flowchart illustrating the flow of processing performed by the control unit 302 executing a program stored in the memory unit 301 of the AP 101. This flowchart illustrates a process performed when the AP 101 starts operating as an AP and receives data via wireless communication. This process is initiated when the AP 101 starts functioning as an AP, such as when the power of the AP 101 is turned on, when the AP 101 receives an instruction to operate as an AP, or when the wireless function is turned on. Although only the STA 102 is connected in the embodiment, multiple STAs may be connected simultaneously. Assume that, when viewed from the STA 102, settings for the APs 101, 104, and 103 to operate as an Upper AP and Lower APs have already been set so as to operate as a single AP in this process. That is, settings for the AP 104 to operate as an Upper AP and settings for the APs 101 and 103 to operate as Lower APs have been set, and the APs 104, 101, and 103 have identified each other. In addition, the STA 102 and the AP 101 are assumed to be connected to consider forwarding data frames in the present embodiment, but this is not the only case when forwarding Management frames. This process may be performed starting when the STA 102 is connected to the AP 101.

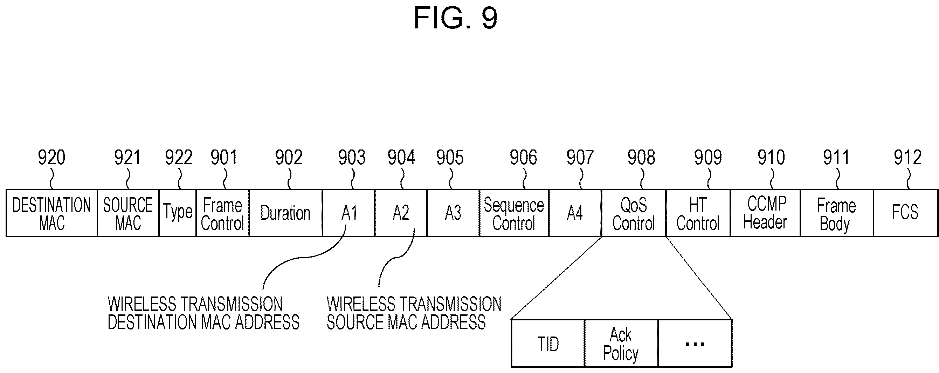

The AP 101 checks whether a frame has been received from the connected STA 102 (S401). Next, it is determined whether or not the received frame is to be forwarded to the AP 104 (S402). This means, for example, that if settings are set such that only Control frames are not to be forwarded among the frames, No is obtained upon reception of a Control frame. Alternatively, it is possible to forward Ack frames among Control frames, without forwarding other types of Control frames. Another possible case is to simultaneously connect an STA that transmits and receives in coordination with the AP 104 and a self-contained STA. If an STA to be connected in coordination with the AP 104 is an STA that conforms to IEEE 802.11bn that supports Multi-AP, it is possible that the received frame is forwarded. If the STA to be connected in coordination with the AP 104 is an STA other than that, it is possible that the received frame is not forwarded. Alternatively, if the STA is an STA that supports, for example, IEEE 802.11bn but not Multi-AP, a process for not forwarding the received frame may be performed. In a case where No is obtained in S402, the AP 101 itself processes the frame (S403). In a case where the frame is to be forwarded (Yes in S402), the MAC header of the received wireless frame is acquired, and the acquired header is placed after the MAC header for wired transmission. Although described later using the frame structure in Fig. 9, the frame body (Frame Body), which contains the data of the wireless frame and other data, is placed after the MAC header of the wireless frame. Then, the generated frame is encapsulated (S404). The MAC header for wireless communication to be encapsulated at this time may contain all the acquired information regarding the MAC header for wireless communication. Alternatively, the MAC header for wireless communication to be encapsulated may contain only the Frame Control field, Sequence Control field, and QoS Contrrol field in the MAC header for wireless communication. Alternatively, one or some of these fields may be contained. Since the MAC header for wireless communication varies from frame to frame, the fields to be forwarded may be changed or partially deleted depending on the frame.

Once the frame encapsulation is complete, it is checked whether or not the length of the frame exceeds a maximum frame length (S405). This is because addition of the wireless header may exceed a maximum data frame length. In a case where the maximum length is exceeded, the frame is fragmented and encapsulated (S406) and forwarded (S407). In wired communication, information indicating that the frame was fragmented may be contained in the header for wired communication or between the header for wired communication and the header for wireless communication. This eliminates the need for the STA 102 to perform different processing for IEEE 802.11bn and other standards such as IEEE 802.11be. In a case where fragmentation and forwarding are not performed, the STA 102 may adjust the length of the data frame so as not to exceed the maximum length. In a case where the maximum length is not exceeded, the frame is forwarded as is to the AP 104 (S411).

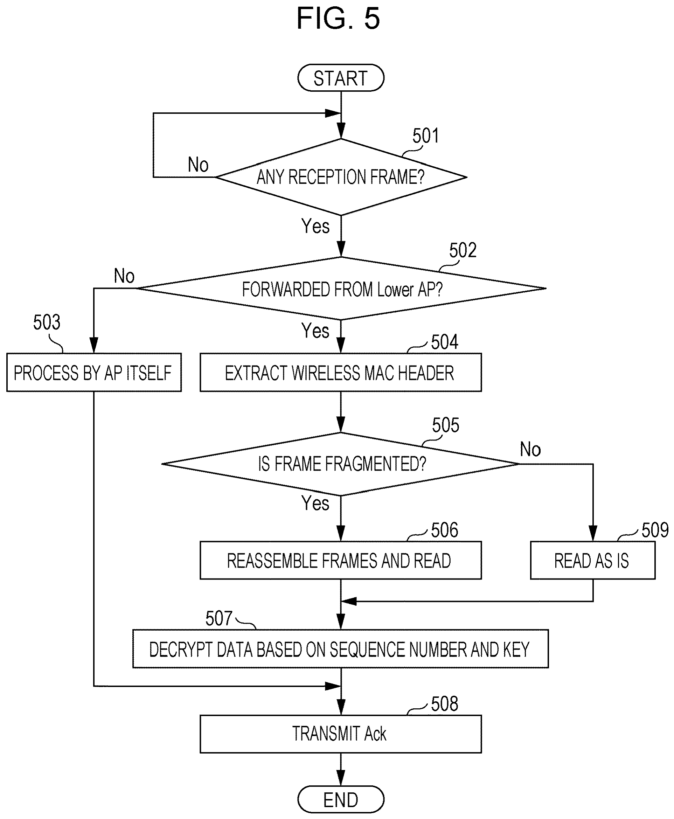

Fig. 5 illustrates the flow of processing performed when the AP 104 receives a frame forwarded from the AP 101. This flowchart illustrates a process performed when the AP 104 starts operating as an AP and receives data via wireless communication. This process is initiated when the AP 104 starts functioning as an AP, such as when the power of the AP 104 is turned on, when the AP 104 receives an instruction to operate as an AP, or when the wireless function is turned on. Similar to the flowchart in Fig. 4, assume that, when viewed from the STA 102, settings for the APs 101, 104, and 103 to operate as an Upper AP and Lower APs have already been set so as to operate as a single AP in this process.

The AP 104 checks whether or not there is a reception frame (501). In a case where there is a reception frame, the AP 104 checks whether or not the frame is a frame forwarded from the AP 101 or the AP 103 (502). When the AP 104 is directly connected to the STA, this is used to determine whether or not the reception frame is a frame received from the connected STA. In a case where the reception frame is a frame received directly from the connected STA, the AP 104 processes the reception frame all by itself (503).

In the case of a forwarded frame (Yes in 502), information regarding the MAC header used in wireless communication needs to be analyzed. First, the MAC header used in wired communication is removed from the forwarded frame, and information regarding the header portion used in wireless communication is read (504). The header is checked to determine whether or not the frame is fragmented (505). In a case where the frame is fragmented, the fragmented frames are reassembled and then analyzed (506). In a case where the frame is not fragmented, the received frame is analyzed as is (509).

The AP 104 analyzes the wireless header, reads the sequence number, packet number, and source MAC address from the analyzed results, and decrypts the data frame encrypted for wireless communication (507). A key used for decryption in this case is a shared key that is shared with the STA 104 when a connection is established with the STA 104. The received packet number is also used in decryption. When it is confirmed that the reception data has been received, the AP 104 transmits an Ack to the STA 102 (508). Alternatively, in order to return a collective Ack for multiple frames, the sequence numbers for the Block Ack are recorded, and the Block Ack is transmitted later. When the Ack frame is transmitted from the AP 104, the Ack frame reaches the STA 102 via the AP 101.

Next, a process performed when a frame transmitted by the AP 104 serving as an Upper AP is transmitted to the STA 102 via the AP 101 will be presented.

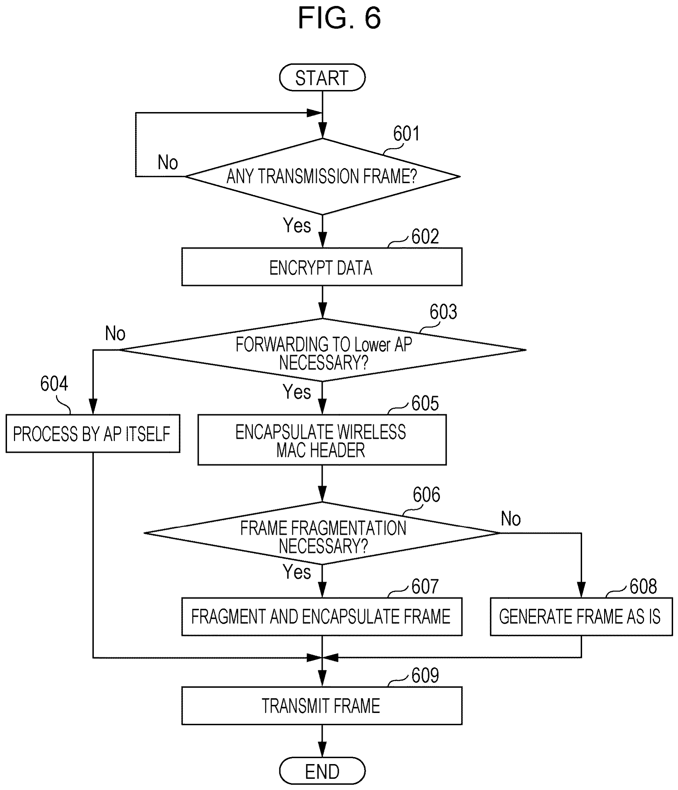

Fig. 6 illustrates the flow of processing performed when the AP 104 transmits frames. This flowchart illustrates a process performed when the AP 104 starts operating as an AP and receives data via wireless communication. This process is initiated when the AP 104 starts functioning as an AP, such as when the power of the AP 101 is turned on, when the AP 104 receives an instruction to operate as an AP, or when the wireless function is turned on. Although only the STA 102 is connected in the embodiment, multiple STAs may be connected simultaneously. Similar to the flowchart in Fig. 4, assume that, when viewed from the STA 102, settings for the APs 101, 104, and 103 to operate as an Upper AP and Lower APs have already been set so as to operate as a single AP in this process. Note that this process may proceed simultaneously with the process illustrated in Fig. 5.

The AP 104 checks whether or not there is data to be transmitted to each STA (601). In a case where a transmission frame is present, the data is encrypted to transmit the frame via wireless communication (602). Next, it is checked whether or not the frame to be transmitted is to be forwarded to any of the AP 101 and the AP 103 (603). Frames to be forwarded may be frames destined for the STA 102 connected to the AP 101. Moreover, frames to be forwarded may be broadcast frames such as Beacon frames and FILS Discovery frames that the AP 104 periodically transmits as an AP. Alternatively, frames to be forwarded may be multicast frames destined for multiple STAs and APs, including the STA 102. Note that in a case where frames are to be forwarded to the STA 102, it is checked which APs are directly connected to the STA 102, and a single AP among the APs is instructed to perform forwarding. In the present embodiment, the AP 101 is instructed to perform forwarding. For example, in a case where the STA 102 is connected to both the AP 101 and the AP 103 simultaneously, the AP 101, the AP 103, or both may be instructed to perform forwarding.

In a case where frames are not to be forwarded to the AP 101 or the AP 103, the AP 104 itself generates frames for wireless communication and transmits the frames via wireless communication (604). Note that in the case of broadcast frames, 604 may be performed such that broadcast frames are not forwarded in addition to the frame to be forwarded. For frames to be forwarded, a frame including a MAC header for wireless communication is generated, and a frame header for wired communication to and from the AP 101 and the AP 103 is added to the frame (605). At this time, it is checked whether the maximum frame length for wired communication is not exceeded (606). In a case where the maximum frame length for wired communication is exceeded, the frame is fragmented (607). In a case where the maximum frame length for wired communication is not exceeded, the frame is generated as is (608). The generated frame is assigned a packet number and a sequence number. Moreover, the frame is encrypted using the packet number and the shared key that the AP 104 itself holds. The generated frame is transmitted via wired communication in the case of the AP 101 and the AP 103 (609). Note that the AP 104 may adjust the length of the data frame in advance to generate a frame for wireless communication such that frame fragmentation does not occur.

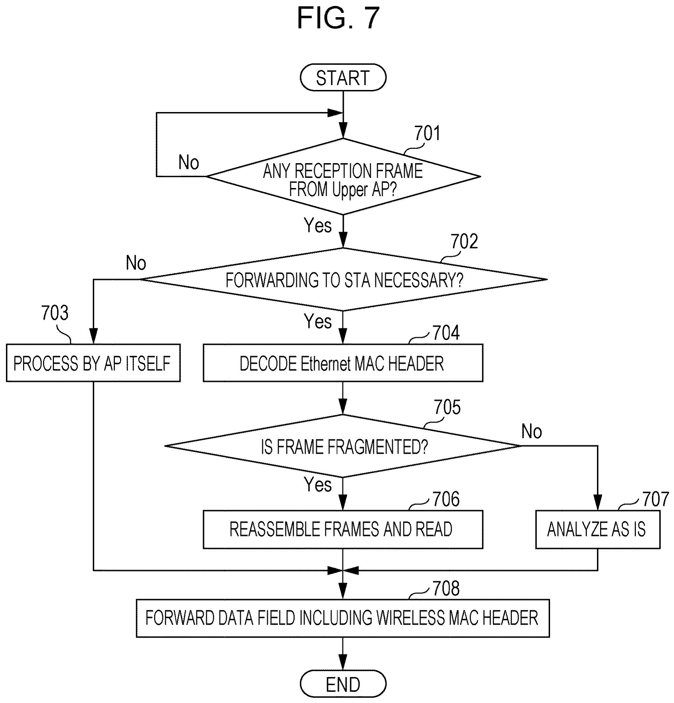

Fig. 7 illustrates the flow of processing performed when the AP 101 receives a data frame from the AP 104 and forwards the data frame to the STA 102. This process is initiated when the AP 101 starts functioning as an AP, such as when the power of the AP 101 is turned on, when the AP 101 receives an instruction to operate as an AP, or when the wireless function is turned on. Although only the STA 102 is connected in the embodiment, multiple STAs may be connected simultaneously. Similar to the flowchart in Fig. 4, assume that, when viewed from the STA 102, settings for the APs 101, 104, and 103 to operate as an Upper AP and Lower APs have already been set so as to operate as a single AP in this process. In addition, the STA 102 and the AP 101 are assumed to be connected to consider forwarding data frames in the present embodiment, but this is not the only case when forwarding Management frames. This process may be performed starting when the STA 102 is connected to the AP 101.

The AP 101 checks whether or not data has been received from the AP 104 (701). In a case where a frame has been received from the AP 104, it is checked whether or not forwarding to the STA is necessary (702). In a case where a frame is transmitted from the AP 104 and destined for the AP 101, the AP 101 itself analyzes and processes the frame because forwarding is unnecessary (703). In the case of frames destined for the connected STA, the AP 101 prepares to forward the frames to the specified STA. First, the AP 101 analyzes the Ethernet MAC header used for wired communication included in the frame received from the AP 104 (704). In this case, the frame received from the AP 104 has the structure illustrated in Fig. 9 below, for example. If there is missing information in the MAC header for wireless communication depending on the type of frame, the missing information needs to be added when the frame is transmitted via wireless communication. The AP 101 analyzes the Ethernet MAC header to check whether or not the frame is fragmented (705). In a case where the frame is fragmented, its frames are reassembled and then a data frame is generated (706). In a case where the frame is not fragmented, a data frame is generated as is (707). When analysis of the data frame is completed, the Ethernet MAC header used for wired communication is discarded.

Lastly, in a case where the MAC header for wireless communication is sent from the AP 104, the frame is forwarded as is. In a case where there is any missing information, that information is added to the MAC header for wireless communication, and the frame is then transmitted (708).

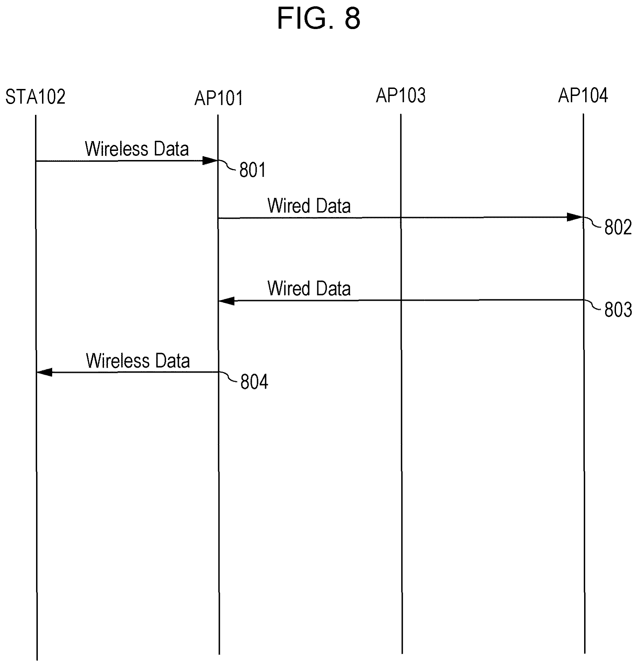

An example of the flow of data frames in Figs. 4 to 7 is illustrated in Fig. 8. A data frame transmitted from the STA 102 is forwarded by the AP 101 (801) and is transmitted from the AP 101 to the AP 104 in a wired manner (802). A data frame transmitted from the AP 104 in a wired manner (803) is similarly forwarded by the AP 101 and transmitted to the STA 102 via wireless communication (804). Frames transmitted in this case include not only data frames but also Ack frames, Management frames, Action frames, and Control frames. Ack frames indicate receipt of data frames. Management frames are used for disconnection. Action frames and Control frames facilitate data communication. As can be seen from the above-described frame flow, communication is performed between the Upper AP (the AP 104) and the Lower AP (the AP 101), and the AP 101 and the AP 104 appear to be operating as a single AP when viewed from the STA 102.

Fig. 9 illustrates a frame example for wired communication between the AP 101 and the AP 104.

The frame example has a frame configuration in which a wired MAC header is newly added. A Frame Control field 901 through a Frame Body field 911 corresponds to a frame itself received from the STA 102 via wireless communication. A MAC header 920 through 922 defined in Ethernet is added to this frame.

A frame example when data is sent to the AP 104 from the STA 102 via the AP 101 will be described.

The Frame Control field 901 defines the type of frame used in wireless communication. For example, this allows identification of whether the frame is a data frame or a Management frame. The Duration field 902 indicates how long the channel is occupied for wireless communication. The A1 field 903 indicates a destination MAC address in wireless communication. In the present embodiment, the A1 field 903 indicates the MAC address of the AP 101. The A2 field 904 indicates a source MAC address in wireless communication. In the present embodiment, the A2 field 904 indicates the MAC address of the STA 102. The AP 101 needs to forward the A2 field 904 to the AP 104 because the AP 104 decodes the content of the encrypted data frame using information in the A2 field 904. In a case where the A2 field is not forwarded as is, the information is input in the source MAC address field 921 for wired communication. The A3 field 905 and the A4 field 907 have values that vary, including their presence, depending on the type and direction of the frame being used. A Basic Serivice Set Identifier (BSSID) and the MAC address of a destination server are input. The Sequence Control field 906 indicates the sequence number of the frame. The value of the field is incremented each time a frame of the same type is transmitted. The Qualityof Service (QoS) field 908 carries information regarding QoS, such as the traffic identifier (TID) of the frame and Ack Policy. The HT Control field 909 contains additional information in wireless communication. The Counter mode with CBC-MAC Protocol (CCMP) Header field 910 contains packet numbers required to encrypt and decrypt the data frame. The Frame Body field 911 contains the content of the encrypted data and information regarding connection and disconnection.

The Frame Check Sequence (FCS) field 912 is a field for frame error detection. In the present embodiment, since the AP 101 performs verification, the AP 101 adds an FCS value to the frame to be forwarded when forwarding the frame to the AP 104. For the FCS field 912, the value received via wireless communication may be forwarded as is in the case of wired communication, and a new FCS field for wired communication may be added thereafter. In the present embodiment, in the case of wired communication, the FCS value for wireless communication is not forwarded and a new FCS value for wired communication is calculated and added. That is, the error detection for wireless communication is performed in the AP 101.

The destination MAC field 920 indicates a destination MAC address in wired communication. In the present embodiment, the destination MAC address is the MAC address of the AP 104. The source MAC address field 921 indicates a source MAC address in wired communication. In the present embodiment, the source MAC address is the MAC address of the AP 101. Note that the value set in this field may be the MAC address of the STA 104. The Type field 722 indicates the frame type specified in wired communication. Instead of this field, a field indicating the frame length may be used. Note that the frame to be forwarded may be encrypted except for the wired MAC header 920 through 922.

### (Other Embodiments)

In the present embodiment, the entire MAC header for wireless communication is forwarded between the AP 101 and the AP 104 but this is not the only case. For example, the destination MAC address 903, the source MAC address 904, the A3 field 905, and the A4 field 907 in the MAC header for wireless communication do not have to be forwarded. This allows the frame length to be kept short. By not forwarding the HT Control field 909, the AP 101 can determine the state of a wireless channel in wireless communication to perform transmission and reception. Alternatively, by not forwarding the Duration field 902, the AP 101 can adjust and change the Modulation and Coding Scheme (MCS) (i.e., the data rate). Since message encryption and decryption are performed by the AP 104 serving as an Upper AP, the Sequence Control field needs to be forwarded. Moreover, the Frame Control field 901 needs to be forwarded to identify the frame type. In contrast, since the frame type can be determined as long as, for example, the Type field and the Subtype field in the Frame Control field 901 are forwarded, only these subfields may be forwarded.

In addition, a recording medium on which software program code is recorded to implement the functions described above may be supplied to a system or device, and the computer (a CPU, an MPU) in the system or device may read and execute the program code stored on the recording medium. In this case, the program code itself, which is read from the storage medium, implements the functions of the embodiment described above, and the storage medium storing the program code constitutes the device described above.

For example, flexible disks, hard disks, optical disks, magneto-optical disks, CD-ROMs, CD-Rs, magnetic tapes, non-volatile memory cards, ROMs, DVDs, etc. can be used as storage media for supplying the program code.

In addition to the above-mentioned functions being implemented by the computer executing the read-out program code, the OS running on the computer may also perform part or all of the actual processing based on the instructions of that program code to implement the functions described above. OS stands for Operating System.

Furthermore, the program code read from the storage medium is written into a memory provided in a function expansion board inserted in the computer or in the function expansion unit connected to the computer. Then, based on the instructions of that program code, the CPU in the function expansion board or function expansion unit may perform part or all of the actual processing to implement the functions described above.

The present invention can also be realized through processing in which a program that implements one or more functions of the above-mentioned embodiment is supplied to a system or device via a network or storage medium, and one or more processors in a computer of the system or device read and execute the program. The present invention can also be realized by a circuit (for example, an ASIC) that implements one or more functions.

The present invention is not limited to the above-mentioned embodiments, and various changes and modifications are possible without departing from the spirit and scope of the present invention. Accordingly, the following claims are attached to disclose the scope of the present invention to the public.

This application claims the benefit of Japanese Patent Application No. 2023-114785, filed July 12, 2023, which is hereby incorporated by reference herein in its entirety.

## Claims

1. A communication device comprising:
a communication means that receives a wireless frame conforming to IEEE 802.11;
a header acquisition means that acquires a header from the wireless frame;
a frame generation means that generates a new frame in which part or all of the acquired header is placed after a header conforming to Ethernet and further a frame body of the received wireless frame is placed after the header; and
another communication means that transmits the new frame to another communication device.

2. A communication device comprising:
a communication means that receives a frame conforming to Ethernet;
a header acquisition means that acquires a header conforming to IEEE 802.11 in the frame;
a frame generation means that generates a new frame conforming to IEEE 802.11 using part or all of the acquired header; and
another communication means that transmits the new frame to another communication device.

3. The communication device according to claim 1 or 2, wherein the header is a MAC header defined in IEEE 802.11.

4. The communication device according to claim 1 or 2, wherein the header includes a Frame Control field defined in IEEE 802.11.

5. The communication device according to claim 1 or 2, wherein the header includes a QoS field defined in IEEE 802.11.

6. The communication device according to claim 1 or 2, wherein the header includes a Sequence Control field defined in IEEE 802.11.

7. The communication device according to claim 1 or 2, wherein the header includes a CCMP Header field defined in IEEE 802.11.

8. The communication device according to claim 1 or 2, wherein the communication device is an access point (AP) that conforms to IEEE 802.11.

9. The communication device according to claim 2, wherein the frame generation means discards a header conforming to Ethernet.

10. The communication device according to claim 1, wherein the other communication device includes
a communication means that receives the new frame,
a means that analyzes part or all of the header conforming to the IEEE 802.11 in the new frame, and
a means that decrypts, from a result of the analysis, part or all of the frame based on a packet number contained in the frame conforming to IEEE 802.11 and a shared key held by the other communication device.

11. A control method for controlling a communication device, the method comprising:
a communication step for receiving a wireless frame conforming to IEEE 802.11;
a header acquisition step for acquiring a header from the wireless frame;
a frame generation step for generating a new frame in which part or all of the acquired header is placed after a header conforming to Ethernet and further a frame body of the received wireless frame is placed after the header; and
another communication step for transmitting the new frame to another communication device.

12. A control method for controlling a communication device, the method comprising:
a communication step for receiving a frame conforming to Ethernet;
a header acquisition step for acquiring a header conforming to IEEE 802.11 in the frame;
a frame generation step for generating a new frame conforming to IEEE 802.11 using part or all of the acquired header; and
another communication step for transmitting the new frame to another communication device.

13. A program for causing a computer to operate as the communication device according to any one of claim 11 or 12.
